# FASCICULE DE BREVET EUROPEEN

(11) **EP 3 138 770 B1**
(45) Date de publication et mention de la délivrance du brevet: **02.05.2018**
(21) Numéro de dépôt: 16186815.3
(22) Date de dépôt: 01.09.2016
(51) Int. Cl.: B64C 1/06, B64C 1/26, B64C 3/18

(54) **NERVURE SIMPLIFIEE POUR CAISSON CENTRAL DE VOILURE D'AERONEF**
VEREINFACHTE RIPPE FÜR ZENTRALGEHÄUSE EINES FLÜGELS EINES LUFTFAHRZEUGS
SIMPLIFIED RIB FOR CENTRAL BOX OF AN AIRCRAFT WING

(30) Priorité: 04.09.2015 FR 1558205
(43) Date de publication de la demande: 08.03.2017
(73) Titulaire: AIRBUS OPERATIONS (SAS), 31060 Toulouse (FR)
(72) Inventeur: SOULA, Denis, 31300 Toulouse (FR); PLET, Matthieu, 31880 La Salvetat-Saint-Gilles (FR); MAQUEDA LAHOZ, Javier, 31770 Colomiers (FR)
(74) Mandataire: Brevalex

(56) Documents cités:
- EP-A1- 1 580 120
- WO-A1-2013/137915
- DE-C- 681 864
- US-A- 1 619 372

## Description

### DOMAINE TECHNIQUE

L'invention concerne une nervure pour le caisson central d'une voilure d'aéronef, plus particulièrement une nervure interne dite nervure courante.

### ÉTAT DE LA TECHNIQUE ANTÉRIEURE

La structure d'un aéronef comprend un fuselage 101 et une voilure 102, reliés ensemble par un caisson central 103, dit caisson central de voilure d'aéronef. Le caisson central 103 supporte notamment des efforts s'exerçant en vol sur les ailes de l'aéronef.

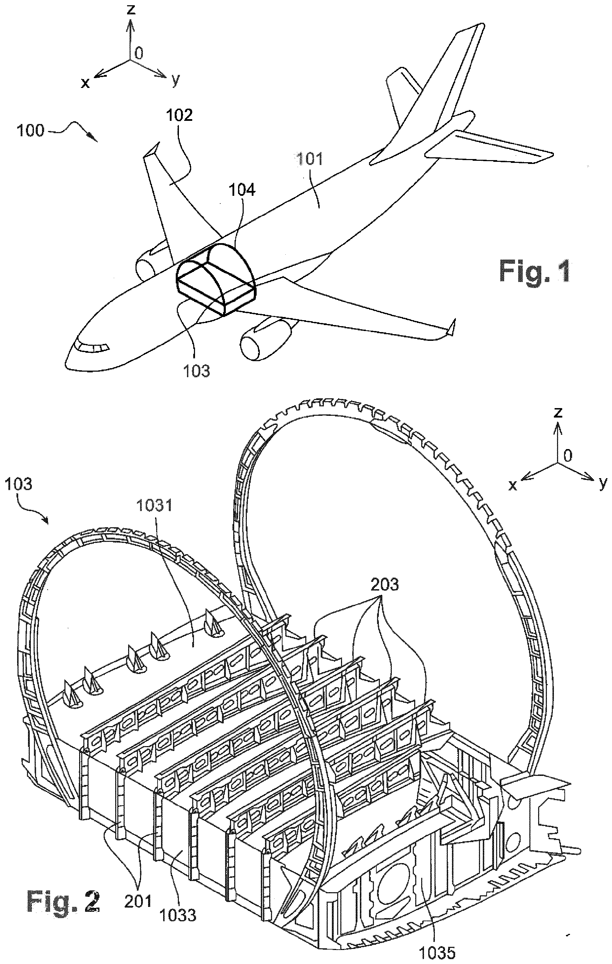

Sur la figure 1, le caisson central 103, ainsi que deux cadres 104 entre lesquels il est disposé, sont représentés en trait gras. On a également représenté un repère orthonormé dans lequel :
- l'axe Ox correspond à l'axe longitudinal de l'aéronef, axe qui s'étend du cône arrière à la pointe avant de l'aéronef;
- l'axe Oy correspond à l'axe transverse de l'aéronef, formant avec l'axe Ox un plan horizontal lorsque l'aéronef est stationné sur un plan horizontal ; et
- l'axe Oz correspond à l'axe de la hauteur dans l'aéronef, correspondant à la verticale lorsque l'aéronef est stationné sur un plan horizontal.

La figure 2 illustre une vue de détail d'un exemple de caisson central 103, orienté dans l'espace de la même façon qu'à la figure 1. Le caisson central 103 comprend en particulier :
- un panneau supérieur 1031, ou panneau extrados, s'étendant sensiblement dans un plan parallèle au plan (x0y), mais légèrement incliné et courbé relativement à ce plan ;
- un panneau inférieur, ou panneau intrados, s'étendant sous le panneau supérieur, sensiblement parallèle à celui-ci (non visible en figure 2) ;
- un longeron avant 1033, s'étendant dans un plan parallèle au plan (yOz) ; et
- un longeron arrière, s'étendant derrière le longeron avant, parallèle à celui-ci (non visible en figure 2).

Ces quatre pièces forment ensemble un volume, dit « volume d'intérêt ». En général, ce volume est fermé latéralement par deux nervures dites d'extrémité, qui s'étendent de chaque côté de l'aéronef dans des plans sensiblement parallèles au plan (xOz). En figure 2, seule la nervure d'extrémité gauche 1035 est visible. A l'intérieur du volume d'intérêt, s'étendent des nervures, dite courantes, ou internes. Les nervures internes s'étendent dans les plans sensiblement parallèles au plan (xOz), ou en d'autres termes dans des plans sensiblement orthogonaux aux panneaux supérieur et inférieur et aux longerons avant et arrière. Les nervures internes s'étendent parallèles aux éventuelles nervures d'extrémité. Les nervures internes forment des pièces de renfort, pour consolider le caisson 103.

D'autres éléments de la figure 2 seront détaillés dans la suite.

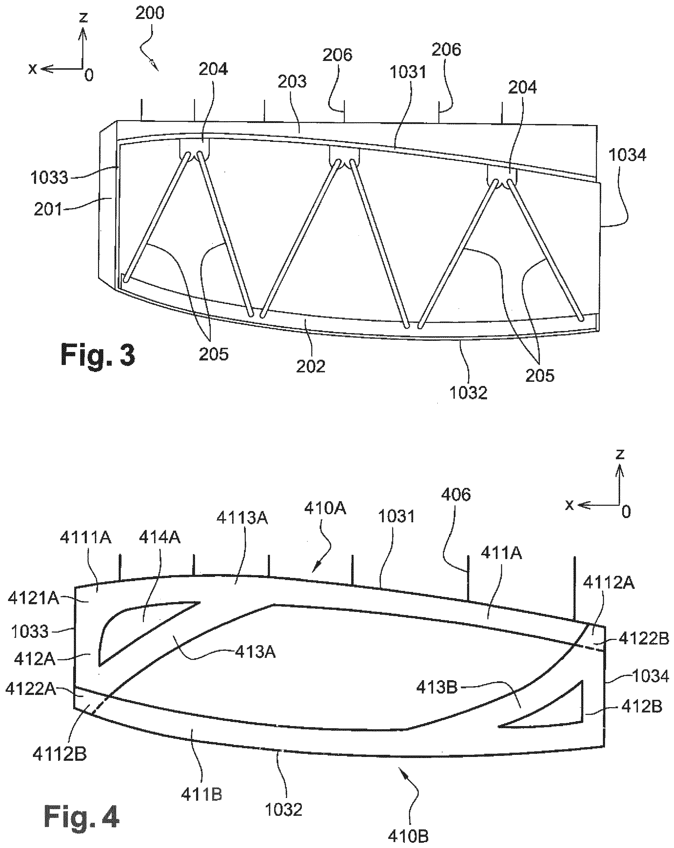

La figure 3 illustre de façon schématique une réalisation de nervure courante 200 selon l'art antérieur, vue dans un plan parallèle au plan (xOz). La nervure courante 200 comprend un piquet vertical 201, qui s'étend selon l'axe (Oz), adjacent au longeron avant et à l'extérieur du volume d'intérêt tel que défini ci-avant. Le piquet vertical 201 est visible également en figure 2. Une semelle de nervure 202 s'étend adjacente au panneau inférieur 1032, à l'intérieur du volume d'intérêt, tandis qu'une poutre sur caisson 203 s'étend adjacente au panneau supérieur 1031 et à l'extérieur du volume d'intérêt (voir également figure 2). La poutre sur caisson 203 s'étend adjacente au panneau supérieur 1031 d'un côté, et à un plan horizontal de l'autre. Des ferrures de bielle 204 font saillie à l'intérieur du volume d'intérêt et depuis la poutre sur caisson. Chaque ferrure de bielle 204 présente deux ouvertures, recevant chacune une bielle 205. Les deux bielles reliées à une même ferrure de bielle s'étendent en biais jusqu'à la semelle de nervure 202, dessinant avec cette dernière une forme de triangle. Une nervure courante 200 selon l'art antérieur présente par exemple six bielles. On a également représenté en figure 3 des biellettes de plancher 206, qui assurent la liaison entre la nervure courante et le plancher dans l'aéronef. Ces biellettes présentent toutes sensiblement la même longueur selon l'axe (Oz). Un second piquet vertical peut s'étendre adjacent au longeron arrière.

On connaît également dans l'art antérieur les documents WO 2013/137915 et EP 1580 120, décrivant chacun un autre exemple de nervure courante selon l'art antérieur, comportant une pluralité de bielles.

Un inconvénient des nervures courantes 200 selon l'art antérieur est que leur installation est complexe, notamment l'installation des bielles 205.

Un objectif de la présente invention est de permettre de simplifier l'installation des nervures internes, ou courante, d'un caisson central de voilure d'aéronef.

### EXPOSÉ DE L'INVENTION

Cet objectif est atteint avec un caisson central de voilure d'aéronef selon la revendication 1.

Le caisson selon l'invention comprend des nervures internes présentant une structure alternative à celle proposée dans l'art antérieur. Cette structure alternative permet de s'affranchir des bielles s'étendant à l'intérieur du volume d'intérêt tel que défini en introduction. Sans ces bielles, l'installation des nervures internes se trouve grandement simplifiée.

De préférence, au moins une pièce de raidissement comprend :
- une première branche s'étendant adjacente au panneau inférieur ou supérieur ;
- une seconde branche s'étendant adjacente au longeron avant ou arrière, une première extrémité de la première branche et une première extrémité de la seconde branche étant reliées ensemble ; et
- un élément de renfort s'étendant depuis la première branche jusqu'à la seconde branche.

L'élément de renfort peut s'étendre depuis une seconde extrémité de la seconde branche jusqu'à une région d'appui de la première branche, ladite région d'appui étant située à distance des extrémités de la première branche.

En variante, l'élément de renfort peut s'étendre depuis une région d'appui de la seconde branche jusqu'à une région d'appui de la première branche, chaque région d'appui étant située à distance des extrémités de la branche correspondante.

Une pièce de raidissement peut comprendre une ouverture traversante s'étendant entre l'élément de renfort, la première branche, et la seconde branche.

En variante, une région d'une pièce de raidissement, située entre l'élément de renfort, la première branche, et la seconde branche, peut être pleine et de résistance mécanique inférieure à celle de l'élément de renfort.

Avantageusement, des deuxièmes extrémités des première et seconde branches de chaque pièce de raidissement d'une même nervure interne sont superposées deux à deux.

De préférence, des deuxièmes extrémités des première et seconde branches de chaque pièce de raidissement d'une même nervure interne sont fixées entre elles deux à deux.

Au moins une pièce de raidissement peut comprendre une série d'évidements, répartis le long de la première branche et adaptés à recevoir des raidisseurs du panneau inférieur ou supérieur auquel ladite première branche est adjacente.

L'invention concerne également un procédé d'installation d'une nervure interne d'un caisson central selon l'invention, comprenant les étapes suivantes :
- installation de la première pièce de raidissement, adjacente au panneau supérieur et à l'un parmi le longeron avant et le longeron arrière ;
- installation de la seconde pièce de raidissement, adjacente au panneau inférieur et à l'autre parmi le longeron avant et le longeron arrière.

### BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :
- la figure 1 illustre en perspective de façon schématique un aéronef, et notamment le caisson central de voilure d'aéronef;
- la figure 2 illustre une vue en perspective d'un exemple de caisson de voilure d'aéronef selon l'art antérieur ;
- la figure 3 illustre une vue de face d'une nervure interne selon l'art antérieur ;
- la figure 4 illustre de façon schématique une vue de face d'un premier mode de réalisation d'une nervure interne selon l'invention ;
- la figure 5 illustre une première variante du mode de réalisation représenté en figure 4 ;
- la figure 6 illustre une vue en éclaté de la nervure interne représentée en figure 5;
- la figure 7 illustre une deuxième variante du mode de réalisation représenté en figure 4 ;
- la figure 8 illustre une vue en coupe d'un détail de la nervure interne représentée en figure 7 ; et
- la figure 9 illustre un détail d'un deuxième mode de réalisation d'une nervure interne selon l'invention.

### EXPOSÉ DÉTAILLÉ DE MODES DE RÉALISATION PARTICULIERS

Le caisson central selon l'invention correspond sensiblement à un caisson central selon l'art antérieur, dans lequel au moins une nervure interne selon l'art antérieur est remplacée par une nervure interne selon l'invention. De préférence, chaque nervure interne selon l'art antérieur est remplacée par une nervure interne respective selon l'invention.

La figure 4 illustre de manière schématique un premier mode de réalisation d'une nervure interne 400 selon l'invention.

La nervure interne 400 s'étend dans un plan parallèle au plan (xOz). En présence de nervures d'extrémité, la nervure interne 400 s'étend dans un plan parallèle au plan des nervures d'extrémité. La nervure interne est constituée principalement de deux pièces de raidissement 410A, et 410B, situées toutes deux entièrement à l'intérieur du volume utile tel que défini en introduction.

Une première pièce de raidissement 410A s'étend adjacente au panneau supérieur 1031 et au longeron avant 1033. Elle s'étend selon toute l'étendue des profils respectifs du panneau supérieur 1031 et du longeron avant 1033, à l'intérieur du caisson central. Ces profils sont définis par l'intersection du panneau supérieur 1031, respectivement du longeron avant 1033, avec un plan parallèle au plan (xOz) passant par la première pièce de raidissement 410A. Selon une variante non représentée, ladite première pièce de raidissement 410A ne s'étend pas selon toute l'étendue desdits profils, mais néanmoins sur plus des trois quarts de celle-ci.

Une seconde pièce de raidissement 410B s'étend adjacente au panneau inférieur 1032 et au longeron arrière 1034. Elle s'étend selon toute l'étendue des profils respectifs du panneau inférieur 1032 et du longeron arrière 1034, à l'intérieur du caisson central. Ces profils sont définis par l'intersection du panneau inférieur 1032, respectivement du longeron arrière 1034, avec un plan parallèle au plan (xOz) passant par la seconde pièce de raidissement 410B. Selon une variante non représentée, ladite seconde pièce de raidissement 410B ne s'étend pas selon toute l'étendue desdits profils, mais néanmoins sur plus des trois quarts de celle-ci.

La nervure interne est réalisée en seulement deux pièces, attachant chacune un longeron et un panneau. Ces deux pièces assurent ensemble les appuis optimaux aux panneaux pour éviter des phénomènes de flambage. Elles contribuent à la rigidité du caisson central.

L'installation d'une nervure interne consiste alors simplement à positionner et fixer chacune des deux pièces de raidissement.

Chaque pièce de raidissement est formée d'un seul tenant au moment de son installation dans le caisson central.

L'ensemble selon l'art antérieur, comprenant la semelle de nervure, la poutre sur caisson, l'au moins un piquet vertical, les ferrures de bielle et la série de plusieurs bielles selon l'art antérieur, est remplacé par deux pièces de raidissement situées à l'intérieur du volume utile défini en introduction. L'assemblage de la nervure interne est donc grandement simplifié.

L'ensemble de la nervure interne se trouve à l'intérieur du volume d'intérêt défini en introduction, ce qui facilite également l'assemblage.

L'invention présente l'avantage de ne pas imposer de modification de la structure globale du caisson central de voilure d'aéronef, notamment des panneaux inférieur et supérieur, des longerons avant et arrière, et le cas échéant des nervures d'extrémité.

La constitution de la nervure en deux pièces permet un ajustage précis à chaque caisson central, celui-ci pouvant présenter des dimensions légèrement différentes d'un exemplaire à l'autre en fonction des tolérances de fabrication et de positionnement acceptées pour ce dernier. L'ajustage n'implique qu'un nombre très limité d'éléments. On ajuste simplement les positions de la première et la seconde pièce de raidissement.

La nervure interne selon l'invention présente une résistance mécanique adaptée au modèle d'aéronef auquel elle est dédiée, de préférence au moins équivalente à celle de la nervure interne correspondante selon l'art antérieur. Elle permet en particulier d'absorber à la fois :
- des contraintes de charge en pression, parallèles à l'axe (Oz), exercée notamment par la différence de pression entre le caisson central et la cabine ;
- des contraintes de chargement sur le longeron avant, induites par le kérosène lors d'un impact sur le sol ; et
- des contraintes de charge dites « rafale positive », correspondant à un fléchissement important des ailes de l'aéronef relativement au fuselage.

La nervure interne selon l'invention ne comprend plus une série de bielles, mais simplement deux pièces sensiblement planes, s'étendant parallèles au plan (xOz).

Dans l'art antérieur, il existe une certaine tolérance de positionnement des trous dans les ferrures de bielle, prévus pour recevoir l'axe autour duquel une extrémité de bielle pivote. Les légers décalages pouvant exister, d'un exemplaire de caisson à l'autre, doivent être pris en compte lors du montage des bielles. En particulier, l'écartement entre les deux axes de pivotement de chaque bielle doit être mesuré, et la bielle doit ensuite être mise à longueur sur mesure. Selon l'invention, on s'affranchit de ces bielles, ce qui permet de s'affranchir de cette mise à longueur sur mesure. Le montage de la nervure interne est alors grandement simplifié.

On va maintenant décrire plus précisément la première pièce de raidissement 410A, telle qu'illustrée en figure 4. C'est une pièce rigide, composée de deux branches et un élément de renfort.

Une première branche 411A s'étend adjacente au panneau supérieur 1031. La première branche 411A suit le profil du panneau supérieur 1031, ce profil étant défini par l'intersection entre ce panneau supérieur et un plan parallèle au plan (xOz) passant par la première branche 411A.

Une seconde branche 412A s'étend adjacente au longeron avant 1033. La seconde branche 412A suit le profil du longeron avant 1033, ce profil étant défini par l'intersection entre ce longeron avant et un plan parallèle au plan (xOz) passant par la seconde branche 412A.

La première et la seconde branche présentent chacune de préférence une forme de plan, s'étendant dans un plan parallèle au plan (xOz). La première et la seconde branche présentent des largeurs réduites dans ce plan.

La première branche 411A et la seconde branche 412A sont reliées ensemble à leurs premières extrémités respectives 4111A, 4121A, au niveau du coin formé entre le panneau supérieur 1031 et le longeron avant 1033.

Afin de consolider l'ensemble formé par ces deux branches, un élément de renfort 413A s'étend entre celles-ci, relié d'un côté à la première branche 411A et de l'autre à la seconde branche 412A. L'élément de renfort s'étend dans le plan des première et seconde branches 411A, 412A. Il s'étend en biais relativement aux première et seconde branches 411A, 412A. Il présente une forme plane, parallèle au plan (xOz), de largeur préférentiellement inférieure ou égale à la largeur moyenne des première et seconde branches.

Dans l'exemple illustré à la figure 4, l'élément de renfort 413A s'étend depuis la seconde extrémité 4122A de la seconde branche, jusqu'à une région d'appui 4113A de la première branche. La seconde extrémité 4122A de la seconde branche est l'extrémité de la seconde branche opposée à la première extrémité 4121A telle que définie ci-dessus.

La région d'appui 4113A est située à distance des extrémités de la première branche 410A. La distance entre le centre de ladite région d'appui et les extrémités 411A, 412A de la première branche, le long du profil du panneau supérieur 1031, est par exemple supérieure à 10% ou même 20% de la longueur de la première branche.

La région d'appui 4113A est par exemple adjacente au deuxième cinquième du profil du panneau supérieur 1031 (panneau auquel la première branche 411A est adjacente). Ce profil est mesuré depuis l'intersection de ce panneau supérieur avec le longeron avant (longeron auquel la seconde branche 412A est adjacente) jusqu'à l'intersection de ce panneau supérieur avec le longeron arrière. Il s'agit d'un profil de panneau, à l'intérieur du caisson central. Ce profil est défini par l'intersection entre ledit panneau supérieur, et le plan parallèle au plan (xOz) passant par la première branche 411A. Ce profil ne s'étend pas forcément en ligne droite. La longueur du profil ne désigne pas sa dimension selon (Ox), mais son étendue à l'intérieur du caisson et dans ledit plan parallèle à (xOz).

Ainsi, soit un profil de longueur I=L, avec I=0 à l'intersection avec le longeron avant 1033, la région d'appui s'étend de I=L/5=L*0.2 à I=2L/5=L*0.4. En variante, la région d'appui est située dans le second tiers dudit profil. Selon une autre variante, la région d'appui est située dans le second quart dudit profil.

En d'autres termes, l'élément de renfort 413A peut s'étendre depuis la seconde extrémité 4122A de la seconde branche jusqu'à une région d'appui 4113A de la première branche, ladite région d'appui étant adjacente au deuxième cinquième du profil du panneau inférieur ou supérieur correspondant, ledit profil étant défini dans un plan parallèle aux nervures internes et passant par ladite première branche, et une longueur dudit profil étant mesurée depuis son intersection avec le longeron avant ou arrière auquel ladite seconde branche est adjacente.

Selon une variante non représentée, l'élément de renfort s'étend depuis une région d'appui de la seconde branche, jusqu'à une région d'appui de la première branche, chaque région d'appui étant située à distance des extrémités de la branche correspondante. La distance entre le centre d'une région d'appui et les extrémités de la branche correspondante, le long du profil du panneau supérieur, respectivement inférieur, est par exemple supérieure à 10% ou même 20% de la longueur de ladite branche.

La configuration de la pièce de raidissement en deux branches et un élément de renfort entre les deux, permet de limiter son encombrement, pour une même résistance mécanique.

Le positionnement de l'élément de renfort décrit ci-dessus, et l'emplacement de la région d'appui, offrent une résistance mécanique optimale ainsi qu'une transmission optimale des efforts, qu'ils soient orientés selon (Oz) ou selon (Ox).

Dans l'exemple représenté en figure 4, l'espace situé entre les première et seconde branches 411A, 412A, et l'élément de renfort 413A, est une simple ouverture traversante 414A, en d'autres termes un trou. En variante, cet espace peut être plein. Lorsque cet espace est plein, il peut présenter une résistance mécanique inférieure à celle de l'élément de renfort, par exemple plus de deux fois plus faible. En pratique, cette résistance mécanique inférieure peut se traduire par une épaisseur plus faible selon l'axe (Oy).

La deuxième pièce de raidissement 410B présente la même structure que la première pièce de raidissement 410A. Alors que la première pièce de raidissement 410A s'étend selon le panneau supérieur 1031 et le longeron avant 1033, la seconde pièce de raidissement 410B s'étend selon le panneau inférieur 1032 et le longeron arrière 1034. La deuxième pièce de raidissement 410B présente une première branche 411B adjacente au panneau inférieur 1032, une seconde branche 412B adjacente au longeron arrière 1034, et un élément de renfort 413B entre les deux.

Les deux pièces de raidissement s'étendent, sensiblement symétriques, à l'intérieur du volume d'intérêt défini en introduction. Le taux de superposition entre la seconde pièce de raidissement et le symétrique de la première pièce de raidissement, est supérieur ou égal à 90%, voire 95%.

Dans l'exemple représenté en figure 4, la première et la seconde pièce de raidissement 410A, 410B sont superposées, au niveau des deux coins formés respectivement entre le panneau supérieur 1031 et le longeron arrière 1034, et entre le panneau inférieur 1032 et le longeron avant 1033. En particulier, la deuxième extrémité 4112A de la première branche 411A (du côté opposé à sa première extrémité 4111A) est superposée à la deuxième extrémité 4122B de la seconde branche 412B, et la deuxième extrémité 4112B de la première branche 411B est superposée à la deuxième extrémité 4122A de la seconde branche 412A.

Puisque l'on s'affranchit de la poutre sur caisson illustrée en figure 3, les biellettes de plancher 406, qui assurent la liaison entre la nervure interne et le plancher de l'aéronef, présentent des longueurs variables, le long du profil du panneau supérieur. Par exemple, le rapport entre la biellette la plus longue et la plus courte est supérieur à 1,5.

Au moins une pièce de raidissement peut être constituée de plaques métalliques usinées, ou déformées par estampage, emboutissage ou forgeage. En complément ou en variante, au moins une pièce de raidissement peut être constituée de plusieurs poutres métalliques fixées ensemble.

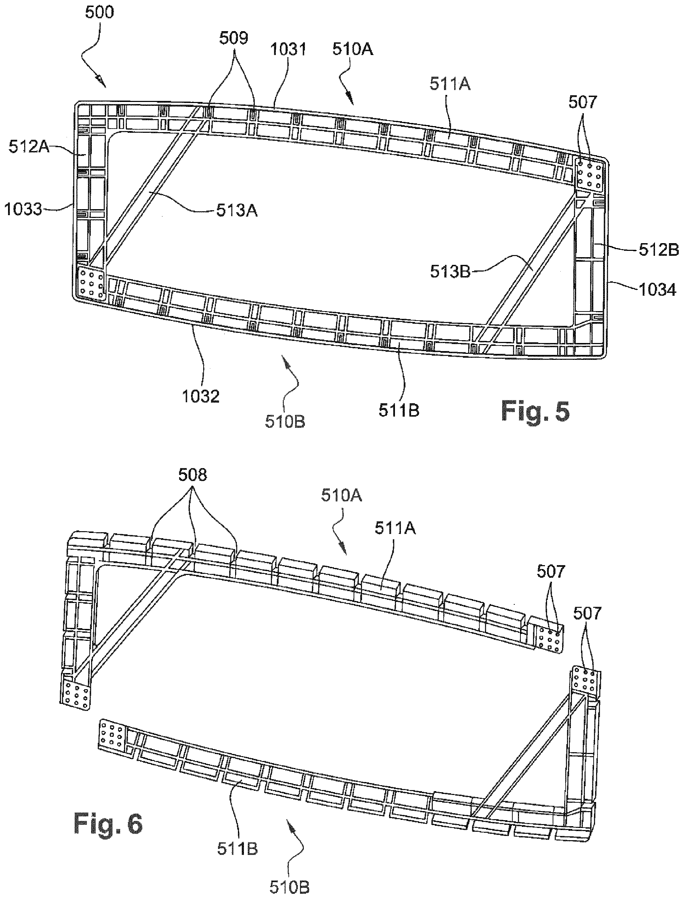

La figure 5 illustre, selon une vue en perspective, une variante particulière 500 de la nervure interne illustrée en figure 4. On retrouve en figure 5 les deux pièces de raidissement 510A, 510B comprenant chacune une première branche 511A, respectivement 511B, une seconde branche 512A, respectivement 512B, et un élément de renfort 513A, respectivement 513B.

Les pièces de raidissement sont réalisées chacune, à partir d'au moins une plaque métallique usinée. En particulier, différents éléments sont découpés dans une plaque métallique, et assemblés ensemble.

En variante, les pièces de raidissement sont réalisées chacune par déformation d'au moins une plaque métallique. La déformation peut être obtenue par estampage, emboutissage, ou forgeage.

En variante, les pièces de raidissement sont réalisées chacune par assemblage de poutres métalliques fixées ensemble par soudure et/ou boulonnerie.

La première branche, la seconde branche et l'élément de renfort peuvent être réalisés séparément, puis ces trois morceaux sont assemblés ensemble, avant leur installation à l'intérieur du volume d'intérêt du caisson central de voilure d'aéronef.

Chaque pièce de raidissement présente en certains endroits des formes conférant une rigidité, par exemple des bords repliés nommés « bords tombés ».

La première et la seconde pièce de raidissement 510A, 510B sont superposées en deux endroits, comme décrit en référence à la figure 4. Elles sont fixées l'une à l'autre au niveau des régions de superposition, par exemple par des rivets. Dans l'exemple représenté en figure 5, les deuxièmes extrémités de chaque branche des deux pièces de raidissement présentent chacune une série d'alésages 507 pour recevoir des rivets, par exemple entre trois et neuf alésages.

Selon une variante non représentée, les deuxièmes extrémités des branches des pièces de raidissement sont fixées deux à deux sans se superposer. Elles sont alors fixées indirectement en deux emplacements, par exemple à l'aide de deux pièces intermédiaires disposées chacune en l'un de ces deux emplacements.

La figure 6 correspond à la figure 5, représentée cette fois selon une vue en éclaté. La figure 6 montre notamment que chaque deuxième extrémité de chaque branche des pièces de raidissement présente neuf alésages, répartis selon un maillage carré et formant ensemble un carré de trois alésages de côté.

Sur la figure 5, la nervure interne 500 est représentée encastrée entre le panneau supérieur 1031, le panneau inférieur 1032, le longeron avant 1033, et le longeron arrière 1034. Sur la figure 6, la nervure interne 500 est représentée seule. La figure 6 montre des évidements 508, répartis le long de chaque première branche 511A, respectivement 511B, adaptés à recevoir des raidisseurs 509 du panneau supérieur, respectivement inférieur. En d'autres termes, le profil de la première branche 511A (respectivement 511B) dans un plan parallèle au plan (xOz), et du côté du panneau supérieur (respectivement inférieur), présente une série d'évidements 508. Les raidisseurs 509 sont des tiges qui s'étendent depuis le panneau supérieur, respectivement inférieur. Elles s'encastrent chacune dans un évidement 508, et coopèrent avec celui-ci pour participer au maintien en position de la nervure interne relativement au panneau supérieur, respectivement inférieur.

Dans l'exemple illustré en figures 5 et 6, les longerons avant et arrière présentent également des raidisseurs qui s'encastrent dans des évidements correspondants des secondes branches 512A et 512B, pour améliorer encore le maintien en position de la nervure interne.

Au moins une pièce de raidissement peut être en matériau composite à matrice thermodurcissable ou thermoplastique.

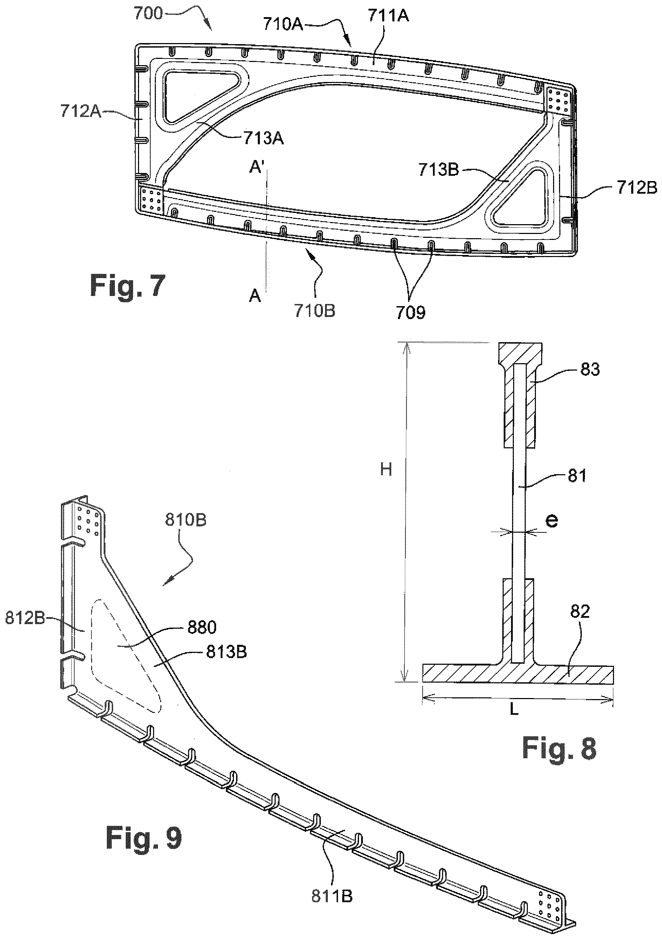

La figure 7 illustre une deuxième variante 700 d'une nervure interne telle que représentée schématiquement en figure 4. On retrouve en figure 7 les deux pièces de raidissement 710A, 710B comprenant chacune une première branche 711A, respectivement 711B, une seconde branche 712A, respectivement 712B, et un élément de renfort 713A, respectivement 713B. La nervure interne est représentée installée, entre les panneaux supérieur et inférieur, et entre les longerons avant et arrière. On voit notamment les raidisseurs 709 de chacun de ces éléments, encastrés dans des évidements correspondant des deux pièces de raidissement 710A, 710B.

Chaque pièce de raidissement 710A, 710B, est réalisée en résine à renfort en fibres de carbone (ou CFRP, pour l'anglais Carbon Fiber Reinforced Polymer). Une telle résine est un matériau composite à matrice thermodurcissable, permettant de fabriquer des pièces présentant une masse réduite. Chaque pièce de raidissement peut être réalisée par injection, ou infusion (par exemple infusion de résine liquide).

En variante, chaque pièce de raidissement est faite en matériau composite à matrice thermoplastique comprenant des fibres notamment en carbone. Une telle pièce est réalisée par injection, ou infusion. Selon une variante avantageuse, chaque pièce de raidissement est réalisée par estampage. L'estampage rend possible de grandes variations de l'épaisseur d'une même pièce mécanique.

Une réalisation en matériau composite offre une grande variété de formes possibles.

La figure 8 illustre une vue en coupe de la pièce de raidissement 710B, selon un plan parallèle au plan (yOz), passant par l'axe AA'.

La première branche 711B est plane, parallèle au plan (xOz). Elle présente une épaisseur au centre (selon Oy) notée e, et une hauteur (selon Oz) notée H, avec le rapport H/e supérieur ou égal à 10, voire même 20.

La première branche 711B présente des bordures plus épaisses, l'une s'étendant du côté du panneau inférieur, et l'autre du côté opposé de la première branche. Par exemple, l'épaisseur de la première branche au niveau de ces bordures est au moins deux fois supérieure à son épaisseur au centre e.

Du côté adjacent au panneau, la pièce de raidissement présente une section en forme de « T », la barre horizontale du « T » étant adjacente audit panneau. Le rapport *H*/*L* entre la hauteur H et la longueur L de la barre horizontale du « T » (selon Oy), est d'environ 2, par exemple entre 1,5 et 3.

L'homme du métier saura aisément calculer les détails de dimensionnement d'une pièce de raidissement, notamment à l'aide de logiciels de calcul par éléments finis.

En figure 8, on a représenté une première branche formée par une pièce centrale 81, un renfort inférieur 82, et un renfort supérieur 83. La pièce centrale 81 présente une épaisseur e. Le renfort inférieur 82 entoure une région inférieure de la pièce centrale pour augmenter l'épaisseur de la première branche 711B du côté du panneau inférieur, et former la barre horizontale du « T » telle que définie ci-dessus. Le renfort supérieur 83 entoure une région supérieure de la pièce centrale pour augmenter l'épaisseur de la première branche 711B du côté opposé au panneau inférieur.

La figure 9 illustre un détail d'un deuxième mode de réalisation d'une nervure interne selon l'invention. La figure 9 illustre en particulier une seconde pièce de raidissement 810B. La forme de cette seconde pièce de raidissement 810B diffère de la forme de la seconde pièce de raidissement illustrée notamment en figure 7, en ce que la région 880 située entre les première et seconde branches 811B, 812B, et l'élément de renfort 813B, est pleine. Elle peut présenter néanmoins une résistance mécanique inférieure à celle de l'élément de renfort.

La pièce de raidissement 810B est formée par exemple en CFRP, et réalisée par estampage.

La seconde pièce de raidissement 810B, une fois installée, est adjacente au panneau inférieur et au longeron avant. Une première pièce de raidissement est alors adjacente au panneau supérieur et au longeron arrière. L'homme du métier saura réaliser de nombreuses variantes de l'invention, notamment des variantes des exemples de réalisation présentés en référence aux figures 4 à 8, dans lesquelles la première pièce de raidissement est adjacente au panneau supérieur et au longeron arrière, et la seconde pièce de raidissement est adjacente au panneau inférieur et au longeron avant.

## Revendications

1. Caisson central de voilure d'aéronef (103) comportant un panneau supérieur (1031), un panneau inférieur (1032), un longeron avant (1033), un longeron arrière (1034), et au moins une nervure dite interne (400; 500 ; 700), chaque nervure interne comprend deux pièces dites de raidissement (410A, 410B ; 510A, 510B ; 710A, 710B ; 810B), disposées à l'intérieur d'un volume délimité par le panneau supérieur (1031), le panneau inférieur (1032), le longeron avant (1033), et le longeron arrière (1034), **caractérisé en ce que** :
- une première pièce de raidissement (410A; 510A; 710A) s'étend adjacente au panneau supérieur et à l'un parmi le longeron avant et le longeron arrière, sur plus des trois quarts de l'étendue des profils respectifs du panneau supérieur et dudit longeron avant ou arrière, à l'intérieur du caisson central, lesdits profils étant définis par l'intersection du panneau supérieur (1031), respectivement du longeron avant (1033) ou arrière (1034), avec un plan parallèle au plan (xOz) passant par ladite première pièce de raidissement (410A; 510A; 710A), où un axe (Ox) correspond à l'axe longitudinal de l'aéronef et un axe (Oz) correspond à l'axe de la hauteur dans l'aéronef ; et
- une seconde pièce de raidissement (410B ; 510B ; 710B ; 810B) s'étend adjacente au panneau inférieur et à l'autre parmi le longeron avant et le longeron arrière, sur plus des trois quarts de l'étendue des profils respectifs du panneau inférieur et dudit longeron avant ou arrière, à l'intérieur du caisson central, lesdits profils étant définis par l'intersection du panneau inférieur (1032), respectivement du longeron avant (1033) ou arrière (1034), avec un plan parallèle au plan (xOz) passant par ladite seconde pièce de raidissement (410B ; 510B ; 710B), où un axe (Ox) correspond à l'axe longitudinal de l'aéronef et un axe (Oz) correspond à l'axe de la hauteur dans l'aéronef.

2. Caisson (103) selon la revendication 1, **caractérisée en ce qu'**au moins une pièce de raidissement (410A, 410B ; 510A, 510B ; 710A, 710B ; 810B) comprend :
- une première branche (411A; 411B; 511A; 511B; 711A; 7118; 811B) s'étendant adjacente au panneau inférieur ou supérieur ;
- une seconde branche (412A; 412B; 512A; 512B; 712A; 712B; 812B) s'étendant adjacente au longeron avant ou arrière, une première extrémité (4111A) de la première branche et une première extrémité (4121A) de la seconde branche étant reliées ensemble ; et
- un élément de renfort (413A ; 413B ; 513A ; 513B ; 713A ; 713B ; 813B) s'étendant depuis la première branche jusqu'à la seconde branche.

3. Caisson (103) selon la revendication 2, **caractérisé en ce que** l'élément de renfort (413A ; 413B ; 513A ; 513B ; 713A ; 713B ; 813B) s'étend depuis une seconde extrémité (4122A) de la seconde branche jusqu'à une région d'appui (4113A) de la première branche, ladite région d'appui étant située à distance des extrémités de la première branche.

4. Caisson (103) selon la revendication 2, **caractérisé en ce que** l'élément de renfort s'étend depuis une région d'appui de la seconde branche (412A ; 412B; 512A; 512B; 712A; 712B; 812B) jusqu'à une région d'appui de la première branche (411A ; 411B; 511A ; 511B ; 711A ; 711B ; 811B), chaque région d'appui étant située à distance des extrémités de la branche correspondante.

5. Caisson (103) selon l'une quelconque des revendications 2 à 4, **caractérisé en ce qu'**une pièce de raidissement (410A; 410B ; 510A; 510B ; 710A; 710B) comprend une ouverture traversante (414A) s'étendant entre l'élément de renfort, la première branche, et la seconde branche.

6. Caisson (103) selon l'une quelconque des revendications 2 à 4, **caractérisé en ce qu'**une région (880) d'une pièce de raidissement (810B), située entre l'élément de renfort, la première branche, et la seconde branche, est pleine et de résistance mécanique inférieure à celle de l'élément de renfort.

7. Caisson (103) selon l'une quelconque des revendications 2 à 6, **caractérisé en ce que** des deuxièmes extrémités (4112A, 4122A, 4112B, 4122B) des première et seconde branches de chaque pièce de raidissement (410A, 410B ; 510A, 510B ; 710A, 710B) d'une même nervure interne sont superposées deux à deux.

8. Caisson (103) selon l'une quelconque des revendications 2 à 7, **caractérisé en ce que** des deuxièmes extrémités (4112A, 4122A, 4112B, 4122B) des première et seconde branches de chaque pièce de raidissement (410A, 410B ; 510A, 510B ; 710A, 710B) d'une même nervure interne sont fixées entre elles deux à deux.

9. Caisson (103) selon l'une quelconque des revendications 2 à 8, **caractérisé en ce qu'**au moins une pièce de raidissement (510A ; 510B ; 710A ; 710B ; 810B) comprend une série d'évidements (508), répartis le long de la première branche (511A ; 511B ; 711A ; 711B ; 811B) et adaptés à recevoir des raidisseurs (509) du panneau inférieur ou supérieur auquel ladite première branche est adjacente.

10. Procédé d'installation d'une nervure interne (400 ; 500 ; 700) d'un caisson central (103) selon l'une quelconque des revendications précédentes, **caractérisé en ce qu'**il comprend les étapes suivantes :
- installation de la première pièce de raidissement (410A ; 510A ; 710A), adjacente au panneau supérieur (1031) et à l'un parmi le longeron avant et le longeron arrière (1033, 1034);
- installation de la seconde pièce de raidissement (410B ; 510B ; 710B ; 810B), adjacente au panneau inférieur (1032) et à l'autre parmi le longeron avant et le longeron arrière (1034, 1033).

## Patentansprüche

1. Flugzeugtragwerk-Flügelmittelkasten (103), umfassend eine obere Platte (1031), eine untere Platte (1032), einen vorderen Längsträger (1033), einen hinteren Längsträger (1034) und mindestens eine so genannte Innenrippe (400 ; 500 ; 700), wobei jede Innenrippe zwei so genannte Versteifungsteile (410A, 410B ; 510A, 510B ; 710A, 710B ; 810B) umfasst, angeordnet im Innern eines durch die obere Platte (1031), die untere Platte (1032), den vorderen Längsträger (1033), und den hinteren Längsträger (1034) begrenzten Volumens,
**dadurch gekennzeichnet :**
- **dass** ein erstes Versteifungsteil (410A ; 510A ; 710A), das sich, angrenzend an die obere Platte und an einen Längsträger unter dem vorderen oder dem hinteren Längsträger, über mehr als drei Viertel der Ausdehnung der jeweiligen Profile der oberen Platte und des genannten vorderen oder hinteren Längsträgers im Innern des Flügelmittelkasten erstreckt, wobei die genannten Profile definiert werden durch die Schnittlinie der oberen Platte (1031), beziehungsweise des vorderen (1033) oder hinteren (1034) Längsträgers, mit einer parallel zur der (xOz) Ebene und durch das erste Versteifungsteil (410A ; 410A ; 710A) verlaufenden Ebene, wo eine Achse (0x) der Längsachse des Flugzeugs entspricht, und eine Achse (0z) der Achse der Höhe in dem Flugzeug entspricht ; und
- **dass** ein zweites Versteifungsteil (410B ; 510B ; 710B ; 810B), das sich, angrenzend an die untere Platte und an den anderen Längsträger unter dem vorderen Längsträger oder dem hinteren Längsträger, über mehr als drei Viertel der Ausdehnung der jeweiligen Profile der unteren Platte und des genannten vorderen oder hinteren Längsträgers im Innern des Flügelmittelkasten erstreckt, wobei die genannten Profile definiert werden durch die Schnittlinie der unteren Platte (1032), beziehungsweise des vorderen (1033) oder hinteren (1034) Längsträgers, mit einer parallel zur der (xOz) Ebene und durch das zweite Versteifungsteil (410B; 410B; 710B) verlaufenden Ebene, wo eine Achse (0x) der Längsachse des Flugzeugs entspricht, und eine Achse (0z) der Achse der Höhe in dem Flugzeug entspricht .

2. Flügelmittelkasten (103) nach Anspruch 1, **dadurch gekennzeichnet, dass** wenigstens ein Versteifungsteil (410A, 410B ; 510A, 510B ; 710A, 710B ; 810B) umfasst:
- einen ersten Zweig (411A ; 411B ; 511A; 511B ; 711A ; 711B ; 811B), der sich an die untere oder obere Platte anliegend erstreckt ;
- einen zweiten Zweig (412A ; 412B ; 512A ; 512B ; 712A ; 712B ; 812B), der sich an den vorderen oder hinteren Längsträger anliegend erstreckt, wobei ein erstes Ende (4111A) des ersten Zweigs und ein erstes Ende (4121A) des zweiten Zweigs miteinander vereinigt sind; und
- wobei ein Verstärkungselement (413A ; 413B ; 513A ; 513B ; 713A ; 713B ; 813B) sich vom ersten Zweig bis zum zweiten Zweig erstreckt.

3. Flügelmittelkasten (103) nach Anspruch 2, **dadurch gekennzeichnet, dass** das Verstärkungselement (413A ; 413B ; 513A ; 513B ; 713A ; 713B ; 813B) sich von einem zweiten Ende (4122A) des zweiten Zweigs bis zu einem Abstützbereich (4113A) des ersten Zweigs erstreckt, wobei der genannte Abstützbereich von den Enden des ersten Zweigs beabstandet ist.

4. Flügelmittelkasten (103) nach Anspruch 2, **dadurch gekennzeichnet, dass** sich das Verstärkungselement von einem Abstützbereich des zweiten Zweigs (412A ; 412B ; 512A ; 512B ; 712A ; 712B ; 812B) bis zu einem Abstützbereich des ersten Zweigs (411A ; 411B ; 511A ; 511B ; 711A ; 711B ; 811B) erstreckt, wobei jeder Abstützbereich von den Enden des entsprechenden Zweigs beabstandet ist.

5. Flügelmittelkasten (103) nach einem der Ansprüche 2 bis 4, **dadurch gekennzeichnet, dass** ein Versteifungsteil (410A, 410B ; 510A, 510B ; 710A, 710B) eine Durchgangsöffnung (414A) enthält, die zwischen dem Verstärkungselement, dem ersten Zweig und dem zweiten Zweig legt.

6. Flügelmittelkasten (103) nach einem der Ansprüche 2 bis 4, **dadurch gekennzeichnet, dass** ein Bereich (880) eines Versteifungsteils (810B), der sich zwischen dem Verstärkungselement, dem ersten Zweig und dem zweiten Zweig befindet, voll ist und eine mechanische Festigkeit aufweist, die niedriger als die des Verstärkungselements ist.

7. Flügelmittelkasten (103) nach einem der Ansprüche 2 bis 6, **dadurch gekennzeichnet, dass** zweite Enden (4112A, 4122A, 4112B, 4122B) des ersten und zweiten Zweiges von jedem Versteifungsteil (410A, 410B ; 510A, 510B ; 710A, 710B) einer selben Innenrippe paarweise aufeinanderliegen.

8. Flügelmittelkasten (103) nach einem der Ansprüche 2 bis 7, **dadurch gekennzeichnet, dass** zweite Enden (4112A, 4122A, 4112B, 4122B) des ersten und zweiten Zweiges von jedem Versteifungsteil (410A, 410B ; 510A, 510B ; 710A, 710B) einer selben Innenrippe paarweise aneinander befestigt sind.

9. Flügelmittelkasten (103) nach einem der Ansprüche 2 bis 8, **dadurch gekennzeichnet, dass** wenigstens ein Versteifungsteil (510A, 510B ; 710A, 710B ; 810B) eine Serie von Aussparungen (508) umfasst, verteilt längs des ersten Zweigs (511A, 511B ; 711A, 711B ; 811B) und angepasst an die Aufnahme von Versteifungsmitteln (509) der unteren oder oberen Platte, der der genannte erste Zweig benachbart ist.

10. Montageverfahren einer Innenrippe (400 ; 500 ; 700) eines Flügelmittelkastens (103) nach einem der vorhergehenden Ansprüche, **dadurch gekennzeichnet, dass** es die folgenden Schritte umfasst:
- Montage des ersten Versteifungsteils (410A; 510A; 710A), angrenzend an die obere Platte (1031) und an den einen unter dem vorderen oder dem hinteren Längsträger (1033, 1034);
- Montage des zweiten Versteifungsteils (410B ; 510B ; 710B ; 810B), angrenzend an die untere Platte (1032) und an den anderen unter dem vorderen oder dem hinteren Längsträger (1033, 1034).

## Claims

1. A central wing box (103) for an aircraft, comprising a top panel (1031), a bottom panel (1032), a front spar (1033), a rear spar (1034), and at least one rib referred to as an internal rib (400; 500; 700), wherein each internal rib comprises two pieces referred to as stiffeners (410A, 410B; 510A, 510B; 710A, 710B; 810B) arranged inside a volume delimited by the top panel (1031), the bottom panel (1032), the front spar (1033), and the rear spar (1034), and wherein
- a first stiffener (410A; 510A; 710A) extends adjacent to the top panel and to one among the front spar and the rear spar, over more than three quarters of the extent of the respective profiles of the top panel and of the front or rear spar, inside the central wing box, wherein said profiles are defined by the intersection of the top panel (1031), respectively of the front spar (1033) or rear spar (1034), with a plane parallel to the plane (xOz) passing through said first stiffener (410A; 510A; 710A), and wherein an axis (Ox) corresponds to the longitudinal axis of the aircraft and an axis (Oz) corresponds to the heightwise axis of the aircraft; and
- a second stiffener (410B; 510B; 710B; 810B) extends adjacent to the bottom panel and to the other among the front spar and the rear spar, over more than three quarters of the extent of the respective profiles of the bottom panel and of the front or rear spar, inside the central wing box, wherein said profiles are defined by the intersection of the bottom panel (1032), respectively of the front spar (1033) or rear spar (1034), with a plane parallel to the plane (xOz) passing through said second stiffener (410B; 510B; 710B), and wherein an axis (Ox) corresponds to the longitudinal axis of the aircraft and an axis (Oz) corresponds to the heightwise axis of the aircraft.

2. The wing box (103) as claimed in claim 1, wherein at least one stiffener (410A, 410B; 510A, 510B; 710A, 710B; 810B) comprises:
- a first leg (411A; 411B; 511A; 511B; 711A; 711B; 811B) extending adjacent to the top or bottom panel;
- a second leg (412A; 412B; 512A; 512B; 712A; 712B; 812B) extending adjacent to the front or rear spar, a first end (4111A) of the first leg and a first end (4121A) of the second leg being joined together; and
- a reinforcing element (413A; 413B; 513A; 513B; 713A; 713B; 813B) extending from the first leg to the second leg.

3. The wing box (103) as claimed in claim 2, wherein the reinforcing element (413A; 413B; 513A; 513B; 713A; 713B; 813B) extends from a second end (4122A) of the second leg to a support region (4113A) of the first leg, said support region being situated some distance from the ends of the first leg.

4. The wing box (103) as claimed in claim 2, wherein the reinforcing element extends from a support region of the second leg (412A; 412B; 512A; 512B; 712A; 712B; 812B) to a support region of the first leg (411A; 411B; 511A; 511B; 711A; 711B; 811B), each support region being situated some distance from the ends of the corresponding leg.

5. The wing box (103) as claimed in any one of claims 2 to 4, wherein a stiffener (410A; 410B; 510A; 510B; 710A; 710B) comprises a through-opening (414A) extending between the reinforcing element, the first leg and the second leg.

6. The wing box (103) as claimed in any one of claims 2 to 4, wherein a region (880) of a stiffener (810B), situated between the reinforcing element, the first leg and the second leg, is solid and of mechanical strength lower than that of the reinforcing element.

7. The wing box (103) as claimed in any one of claims 2 to 6, wherein second ends (4112A, 4122A, 4112B, 4122B) of the first and second legs of each stiffener (410A, 410B; 510A, 510B; 710A, 710B) of a same internal rib are superposed in pairs.

8. The wing box (103) as claimed in any one of claims 2 to 7, wherein second ends (4112A, 4122A, 4112B, 4122B) of the first and second legs of each stiffener (410A, 410B; 510A, 510B; 710A, 710B) of the same internal rib are secured together in pairs.

9. The wing box (103) as claimed in any one of claims 2 to 8, wherein at least one stiffener (510A; 510B; 710A; 710B; 810B) comprises a series of cavities (508), distributed along the first leg (511A; 511B; 711A; 711B; 811B) and designed to accommodate stiffening means (509) of the bottom or top panel to which said first leg is adjacent.

10. A method of installing an internal rib (400; 500; 700) of a central wing box (103) as claimed in any one of the preceding claims, which comprises the following steps:
- installing the first stiffener (410A; 510A; 710A) adjacent to the top panel (1031) and to one among the front spar and the rear spar (1033, 1034);
- installing the second stiffener (410B; 510B; 710B; 810B) adjacent to the bottom panel (1032) and to the other among the front spar and the rear spar (1034, 1033).
